# EUROPEAN PATENT APPLICATION

(11) **EP 1 211 597 A2**
(43) Date of publication of application: **05.06.2002**
(21) Application number: 01310008.6
(22) Date of filing: 29.11.2001
(51) Int. Cl.: G06F 9/445

(54) **Parameter tuner system**

(30) Priority: 01.12.2000 JP 2000367733
(71) Applicant: Hudson Soft Co., Ltd., Sapporo-shi, Hokkaido (JP)
(72) Inventor: Takeoka, Yukio, Toyohira-ku, Sapporo-shi, Hokkaido (JP)
(74) Representative: Haley, Stephen

(57) **Abstract**

A parameter tuner system, in which the development efficiency of an application program including parameters such as an image and sound is improved, is provided. A program for changing a parameter being stored in a shared memory 31 is provided on a host computer 10, while a program for reflecting the changed parameter to an application program to perform execution thereof is provided on a target machine 40, whereby change of parameters and the executive validation of the application program can easily be conducted.

## Description

The present invention relates to a parameter tuner system for adjusting parameters included in an application program such as a game program, and particularly to a parameter tuner system in which the development efficiency of an application program including parameters as an image, sound or the like is improved.

Conventionally, in the development of an application program such as a game program, the adjustment of parameters is conducted by compiling a source code on a host computer side and making the executive validation thereof on a target machine or a game appliance side at each time when a parameter which is described in a source code is changed, or by implementing a program for changing and reflecting parameters in an application program, operating practically the application program on the target machine side to modify the program utilizing a part of its display screen, checking the result, and reflecting the determined value of the parameter to the source code.

However, according to the conventional parameter adjusting method, there is a disadvantage in that complicated work is required before determining the optimum parameter. That is, frequent work for modifying and compiling a source code becomes necessary. Further, such work becomes necessary as implementing the function for changing and reflecting parameters, which is unnecessary to the substantial application program itself, to an application program in such a way that the operation of the application program is not affected. For this reason, the development efficiency of an application program has been lowered.

Accordingly, it is an object of the present invention to provide a parameter tuner system in which the improvement of development efficiency of an application program including a parameter such as an image or sound is achieved.

According to a feature of the present invention, a parameter tuner system comprises:
a host computer for changing parameters such as image and sound included in an application program; and
a target machine for reflecting the parameters to the application program and for making execution thereof.

According to the above construction, a program for changing parameters included in the application program is provided on the host computer and a program for reflecting the changed parameter to the application program and executing such application program is provided on the target machine, so that the change of parameters and the executive validation of the application program can be easily conducted.

In the Drawings;
Fig.1 is a block diagram showing a parameter tuner system according to an embodiment of the present invention;
Fig.2 is an illustration for showing a parameter change screen in a host computer of the parameter tuner system according to the embodiment of the present invention;
Fig.3 is a flow chart showing the operation in a target machine of the parameter tuner system according to the embodiment of the present invention; and
Fig.4 is a flow chart showing the operation of the whole parameter tuner system according to the embodiment of the present invention.

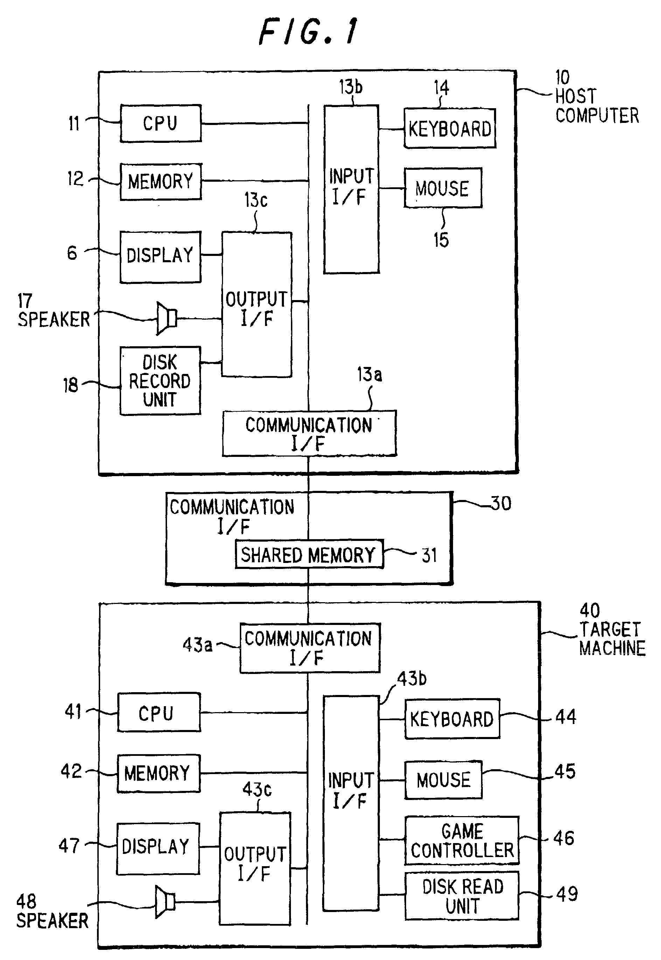

Fig.1 shows a parameter tuner system according to a preferred embodiment of the present invention. This parameter tuner system comprises a host computer 10 for changing parameters such as an image and sound being included in a game program or an application program, a communication interface (I/F) 30 provided with a shared memory 31 storing a parameter table into which the changed parameter is written, and a target machine or a game apparatus 40 connected to the host computer 10 via the communication I/F. Meanwhile, in the present application, "Parameter" means information such as size, color and motions of parts such as eyes, nose or the like of a character, color of the background, and volume and frequency of sound, which are adjusted while making a game program operate practically, and flag information for debugging.

The host computer 10 comprises a CPU 11 for controlling each unit of the computer 10 to change parameters included in a game program, a memory 12 for storing operation programs of CPU 11 such as a parameter change program for changing parameters included in the game program, a parameter reflection program for reflecting the parameter being stored in the shared memory 31 to the game program and a communication program for performing communication between the host computer 10 and the communication I/F 30, a communication interface (I/F) 13a for performing communication of data between the host computer 10 and the communication I/F 30, a keyboard 14 and a mouse 15 connected via an input interface (I/F) 13b, a display 16 such as a CRT display or a liquid crystal display, a speaker 17 and a disk record unit 18 for recording a program or data in a disk as CD-ROM, ROM or the like, which are connected via an output interface (I/F) 13C.

The target machine 40 comprises a CPU 41 for controlling each unit of the target machine 40 to execute the game program, a memory 42 for storing operation programs of CPU 41 such as a game program, a program for reflecting the parameter being stored in the shared memory 31 to the game program and a communication program for performing communication between the machine 40 and the communication I/F 30, a communication interface (I/F) 43a for performing communication of data between the machine 40 and the communication I/F 30, a keyboard 44, a mouse 45, a game controller 46 and a disk read unit 49 for reading the game program from a disk such as CD-ROM or ROM storing the game program, which are connected via an input interface (I/F) 43b, and a display 47 such as a CRT display or a liquid crystal display and a speaker 48 which are connected via an output interface (I/F) 43c. The game controller 46 is provided with a directional key such as a joy-stick or a cross key and various kinds of input keys as A button, B button, a start button and the like.

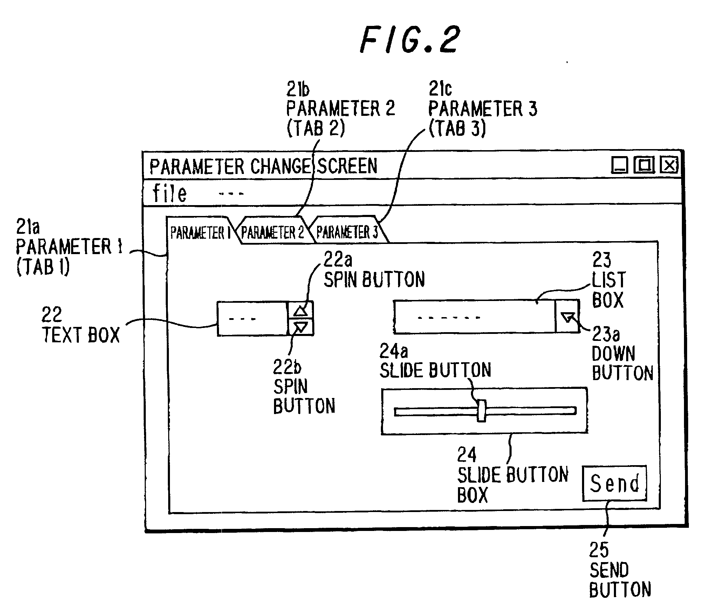

Fig.2 shows a parameter change screen displayed on the display 16 of host computer 10 by the parameter change program. On the parameter change screen 20, three tabs 21a, 21b and 21c are prepared correspondingly to a plurality of parameters such as character, background or sound (parameter 1, 2, and 3), and in each of the tabs 21a, 21b and 21c, various kinds of parameter change keys are provided in compliance with the parameter 1, 2 or 3. When one of the tabs 21a, 21b and 21c is clicked on, the clicked tab 21a, 21b, or 21c migrates to the front to be displayed.

In Fig. 2, on the tab 21a displayed in the front, there are displayed a text box 22 for setting the value of a parameter by clicking on spin button 22a or 22b, a list box 23 for selecting a detailed parameter of the parameter by clicking on a down button 23a, a slide button box 24 for setting a rate of the parameter by a slide button 24a, and a "Send" button 25 for writing the parameter which has been set at the text box 22 or the slide button box 24 into the shared memory 31. Meanwhile, such construction may be adopted that, without providing "Send" button 25, the parameter in the shared memory 31 is renewed immediately when the parameter was changed by the parameter change keys such as spin buttons 22a or 22b, or the slide button 24a.

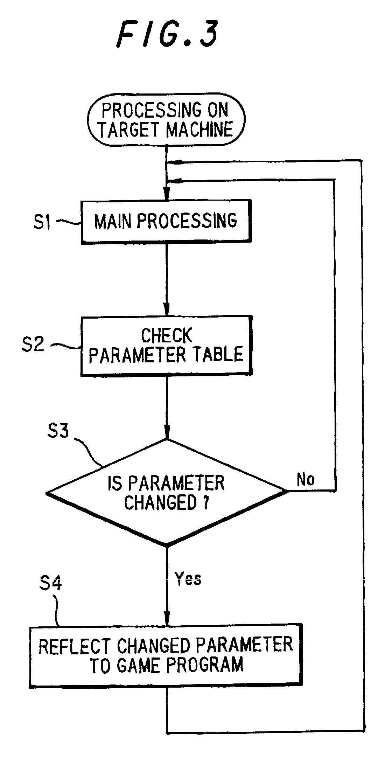

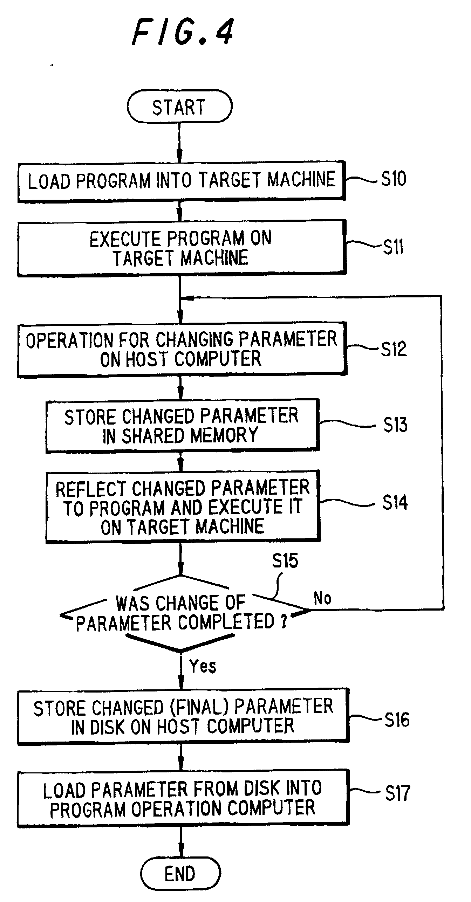

Fig.3 shows the operation of the target machine 40, and Fig.4 shows the operation of the whole system. At first, an operator sets a disk such as a write once disk or a flash ROM cartridge, which stores a game program developed by a programmer and including a standard parameter, in the disk read unit 49 of the target machine 40. CPU 41 of the target machine 40 controls the disk read unit 49 to read the game program from the disk and stores it in the memory 42 (S10).

Next, the operator starts up the game by operating the start button of the game controller 46. CPU 41 performs the main processing for executing the game program which is stored in the memory 42, based on the operation of the start button (S1, S11). The content of the game is displayed on the display 47 via the output I/F 43c, and also the sound is output from the speaker 48.

At this step, when the operator judges it necessary to change the parameter from the displayed screen of the display 47 or the output of the speaker 48, the operator operates the keyboard 14 or mouse 15 of the host computer 10 to change the value of the parameter included in the game program (S12).

That is, the operator selects the tab 21a, 21b or 21c on the parameter change screen as shown in Fig.2 corresponding to the parameter to be changed, clicks on the down button 23a of the list box 23, if there exist the detailed parameters of the parameter, to select such a detailed parameter, operates the spin button 22a or 22b of the text box 22 or the slide button 24a of the slide button box 24 to change the parameter, and clicks on the "Send" button 25. As the detailed parameters, for example, there are parts such as eyes and nose of a character's face. CPU 11 writes the value of the parameter, which was changed by the operation of the spin button 22a or 22b or the slide button 24a, into the parameter table in the shared memory 31 of the communication I/F 30 via the communication I/F 13a (S13).

Next, the operator operates the keyboard 44 or the mouse 45 of the target machine 40 to mirror the parameter within the shared memory 31 in the game program, and starts up the game by operating the start button of the game controller 46 (S14). That is, CPU 41 of the target machine 40 checks the parameter table being stored in the shared memory 31 by utilizing the spared time of CPU 41 (S2), examines whether the parameter in the table is changed or not (S3), and when the parameter is changed, reflects the changed parameter to the game program which is stored in the memory 42 to execute it again (S4).

Thus, the work for changing the parameter is completed, and if the operator judges that no more change of the parameter is required (S15), a disk is set in the disk record unit 18. CPU 11 of the host computer 10 controls the disk record unit 18 to write the finally determined parameter, which exists in the parameter change program operating on the computer 10, into the disk (S16). The disk is loaded into a computer for game program preparation (S17), and the final parameter is reflected to the source file of the game program. Thereafter, the source file is converted into a game program by the compiler of the computer for game program preparation, and is stored (burnt) on CD-ROM or the like.

According to the parameter tuner system in the preferred embodiment, a program for changing the parameter which is stored in the shared memory 31 is provided on the host computer 10, and a program for reflecting the changed parameter to an application program to make the execution thereof is provided on the target machine 40, so that change of parameters and the executive validation of the application program can be easily conducted. As a result, the development efficiency of an application program is improved.

Further, a person in charge of adjusting the parameter of a background, for example, can adjust the parameter while checking the state of the background in the game program in operation. Therefore, it becomes possible to conduct the adjustment of the parameter in consideration of the balance of the whole game.

Further, since a parameter can be changed visually with the parameter change screen 20, even a person who is not accustomed to the development of the program can easily conduct the work for changing parameters.

Meanwhile, the game program may be downloaded from the host computer 10 to the target machine 40 via the communication I/F 30. Further, the communication I/F 30 having the shared memory 31 may be provided at an expansion board of the host computer 10. Further, a plurality of target machines and shared memories may be connected to the host computer 10 via a network as Internet or LAN or the like such that the executive validation can be performed simultaneously,

Further, in the preferred embodiment, the explanation is made for the case where a game program is used as an application program, but the present invention can be applied similarly to other application programs including parameters, which require the adjustment while making such application programs operate,

As explained in the above, according to the parameter tuner system of the present invention, a program for changing parameters in an application program is provided on a host computer and a program for reflecting the changed parameter to the application program and making execution thereof is provided on a target machine, so that change of parameters and the executive validation of the application program can be easily performed, whereby the improvement of development efficiency of an application program can be accomplished.

Although the present invention has been described with respect to specific embodiment for complete and clear disclosures, the appended claims are not to be thus limited but are to be construed as embodying all modification and alternative constructions that may be occurred to one skilled in the art which fairly fall within the basic teaching here is set forth.

## Claims

1. A parameter tuner system comprising:
a host computer for changing parameters such as image and sound included in an application program; and
a target machine for reflecting said parameters to the application program and for making execution thereof.

2. A parameter tuner system according to claim 1, wherein:
said host computer is provided with a shared memory for storing said changed parameter and being accessible from both of said host computer and said target machine.

3. A parameter tuner system according to claim 1, wherein:
said target machine is provided with an output means for outputting an image or sound resulted from the execution of said application program.

4. A parameter tuner system according to claim 1, wherein:
said host computer is provided with a parameter change means for displaying an alteration key on a display screen and changing said parameter in accordance with the operation for said alteration key.

5. A parameter tuner system according to claim 1, wherein said application program is a game program, and
said parameters are size, color and motions of parts such as eyes, noses of a character, color of the background, and volume and frequency of sound, or the like, which constitute the content of said game program.
